# EUROPÄISCHE PATENTSCHRIFT

(11) **EP 2 848 182 B1**
(45) Veröffentlichungstag und Bekanntmachung des Hinweises auf die Patenterteilung: **25.10.2017**
(21) Anmeldenummer: 14183513.2
(22) Anmeldetag: 04.09.2014
(51) Int. Cl.: A47L 15/48, A47L 15/42

(54) **Spülautomat, insbesondere Reinigungs- und/oder Desinfektionsautomat für gewerbliche Zwecke**
Rinsing machine, in particular a cleaning and/or disinfection machine for commercial purposes
Automate de rinçage, notamment automate de nettoyage et/ou désinfection à but industriel

(30) Priorität: 12.09.2013 DE 102013110008
(43) Veröffentlichungstag der Anmeldung: 18.03.2015
(73) Patentinhaber: Miele & Cie. KG, 33332 Gütersloh (DE)
(72) Erfinder: Malec, Tobias, 33729 Bielefeld (DE)

(56) Entgegenhaltungen:
- EP-A1- 2 394 730
- EP-A1- 2 604 165
- EP-A2- 2 286 708
- EP-A2- 2 292 132
- WO-A1-02/03002

## Beschreibung

Die Erfindung betrifft einen Spülautomaten, insbesondere einen Reinigungs- und/oder Desinfektionsautomaten für gewerbliche Zwecke, mit einem einen Spülraum bereitstellenden Spülbehälter und einer Trocknungseinrichtung zur Trocknung von im Spülraum befindlichem Spülgut, wobei die Trocknungseinrichtung eine mit einem reversibel dehydrierbaren Sorptionsmittel bestückte Sorptionseinheit aufweist, die mit dem Spülraum in strömungstechnischer Verbindung steht.

Ein Spülautomat der eingangs genannten, das heißt gattungsgemäßen Art ist aus dem Stand der Technik an sich gut bekannt, weshalb es eines gesonderten druckschriftlichen Nachweises an dieser Stelle nicht bedarf. Es sei deshalb nur beispielhaft auf die EP 2292132 A2 und die EP 2286708 A2 verwiesen.

Gattungsgemäße Spülautomaten verfügen über einen Spülbehälter, der seinerseits einen Spülraum bereitstellt. Der Spülraum dient im bestimmungsgemäßen Verwendungsfall der Aufnahme von zu reinigendem Spülgut.

Zur Beaufschlagung von gereinigtem Spülgut mit Trocknungsluft dient eine Trocknungseinrichtung. Diese verfügt typischerweise über ein Gebläse, das im Trocknungsfall Trocknungsluft in den Spülraum einfördert.

Im einfachsten Fall dient die über das Gebläse in den Spülraum eingeförderte Trocknungsluft dazu, die im Spülraum befindliche, warmfeuchte Luft aus dem Spülraum auszutreiben. Die im Spülraum befindliche warmfeuchte Luft wird also durch die von außen zugeführte Trocknungsluft ausgetauscht.

Von Nachteil dieser Verfahrensdurchführung ist der hohe Energieverlust. Zum einen wird die im Spülraum befindliche warmfeuchte Luft ungenutzt an die Umgebung abgegeben und die zugeführte Trocknungsluft muss vor einem Einführen in den Spülraum aufgeheizt werden. Zum anderen geht dem gesamten Spülsystem durch die Abförderung der feuchtwarmen Innenraumluft Wasser verloren, das im weiteren Verfahrensgang zu ersetzen ist. Bei Spül- und Desinfektionsautomaten für gewerbliche Zwecke können dies drei Liter und mehr an Wasser sein, die durch Austrag der feuchtwarmen Spülraumluft in Form von Dampf ungenutzt an die Umgebung abgegeben werden.

Um die voraufgeführten Nachteile zu vermeiden und Ressourcen zu schonen, ist aus dem Stand der Technik die sogenannte Sorptionstrocknung bekannt geworden. Im Falle der Sorptionstrocknung ist die Trocknungseinrichtung mit einer Sorptionseinheit ausgerüstet. Diese stellt ein reversibel dehydrierbares Sorptionsmittel bereit, beispielsweise Zeolith.

Bei der Sorptionstrocknung wird dem Spülraum die sich dort nach dem letzten Spülgang befindliche feuchtwarme Luft entnommen und der Sorptionseinheit zugeführt. Innerhalb der Sorptionseinheit findet ein Kontakt zwischen der feuchtwarmen Luft und dem Sorptionsmittel statt, infolgedessen die in der feuchtwarmen Luft befindlichen Wassermoleküle vom Sorptionsmittel gebunden werden, und zwar in einer exothermen Reaktion, das heißt unter Abgabe von Wärme. Es findet so eine Trocknung der anfänglich feuchtwarmen Luft, das heißt eine Entfeuchtung derselben statt und die getrocknete Luft gelangt alsdann von der Sorptionseinheit zurück in den Spülraum. Mittels eines Gebläses erfolgt eine Umwälzung der Luft und der so erzeugte Luftaustausch zwischen dem Spülraum und der Sorptionseinheit wird so lange aufrecht erhalten, bis eine wunschgemäße Trocknung der Luft und damit auch des im Spülraum befindlichen Spülgutes erreicht ist.

Nach Abschluss der Lufttrocknung liegt in der Sorptionseinheit gesättigtes, feuchtes Sorptionsmittel vor. Zum Zwecke der Regenerierung, das heißt Desorption des Sorptionsmittels wird dieses erhitzt. Dies geschieht beispielsweise mittels einer elektrischen Heizung. Infolgedessen tritt das vom Sorptionsmittel zuvor durch Kondensation aufgenommene Wasser als Wasserdampf aus und kann der Sorptionseinheit entnommen werden. Typischerweise wird der bei einem Regeneriervorgang freiwerdende heiße Wasserdampf zum Zwecke der Wasser- und Wärmerückgewinnung dem Spülraum zugeführt, wo dann beispielsweise zu Beginn eines neuen Spülgangs eine Erwärmung von Spülflotte und/oder des im Spülraum befindlichen Spülguts erfolgen kann.

Die EP 2394730 A1 beschreibt ein Hausgerät zur Trocknung eines Gutes, welche eine Adsorptionseinrichtung aufweist, wobei während der regenerierenden Betriebsphase aus dem Gut verdampfende Feuchtigkeit adsorptionsmittellos zwischengespeichert wird, indem diese Feuchtigkeit von der für diesen Zweck erwärmten Prozeßluft aufgenommen wird.

Obgleich sich die aus dem Stand der Technik vorbekannte Sorptionstrocknung im alltäglichen Praxiseinsatz bewährt hat, besteht Verbesserungsbedarf, insbesondere hinsichtlich einer optimierten Nutzung. So haftet der vorbekannten Sorptionstrocknung das grundlegende Problem an, dass die Wiederaufbereitung des Sorptionsmittels eine gewisse Zeit in Anspruch nimmt, im parallel durchgeführten Spülprogramm aber nicht zu jedem beliebigen Zeitpunkt Wärme zur Aufheizung der Spülflotte benötigt wird. Das vom Spülprogramm bereitgestellte Zeitfenster, in welchem überhaupt vom Sorptionsmittel während einer Desorption abgegebener heißer Wasserdampf genutzt werden kann, ist äußerst eng bemessen, weshalb vorbekannte Systeme im zeitlichen Ablauf sehr unflexibel sind. Innerhalb dieser vom Spülprogramm vorgegebenen, vergleichsweise kurzen Zeitfenster kann in der Regel nicht eine vollständige Desorption durchgeführt werden, so dass es entweder nur zu Teildesorptionen kommt und/oder freiwerdender Wasserdampf nicht in Gänze genutzt, sondern an die Umgebungsatmosphäre abgegeben wird. Im Ergebnis ist auch die mit der Sorptionstrocknung erzielte Energierückgewinnung weiter optimierbar.

Ausgehend vom Vorbeschriebenen ist es deshalb die **Aufgabe** der Erfindung, einen Spülautomaten der eingangs genannten Art vorzuschlagen, der hinsichtlich seiner Energieeffizienz noch weiter verbessert ist.

Zur **Lösung** dieser Aufgabe wird mit der Erfindung ein Spülautomat mit den Merkmalen von Anspruch 1 vorgeschlagen.

Gemäß der erfindungsgemäßen Ausgestaltung ist in Ergänzung zur Sorptionseinheit ein Dampfkondensator vorgesehen. Dabei stehen die Sorptionseinheit und der Dampfkondensator in strömungstechnischer Verbindung.

Im bestimmungsgemäßen Verwendungsfall erlaubt es die erfindungsgemäße Ausgestaltung, dass der im Fall der Desorption des Sorptionsmittels freiwerdende Wasserdampf in den an die Sorptionseinheit strömungstechnisch angeschlossenen Dampfkondensator eingeleitet wird. Hier findet dann eine Kondensation des die Sorptionseinheit verlassenden Wasserdampfes statt, wobei im Ergebnis Warmwasser entsteht. Dieses kann im weiteren Ablauf eines parallel durchgeführten Spülprogramms wiederverwendet werden, wobei eine direkte Einleitung in den Spülraum oder eine Beschickung eines Vorratsbehälters zum Zwecke der Bevorratung stattfinden kann.

Der Vorteil der erfindungsgemäßen Ausgestaltung besteht insbesondere darin, dass eine Desorption des Sorptionsmittels zu einem beliebigen Spülprogrammzeitpunkt durchgeführt werden kann, da nicht der im Falle der Desorption freiwerdende heiße Wasserdampf in den Spülraum des Automaten einzuleiten ist. Es wird mittels des erfindungsgemäß vorgesehenen Dampfkondensators vielmehr Heißwasser erzeugt, das in einem Vorratsbehälter zwischengespeichert und zu einem späteren Zeitpunkt dem Spülraum zugeführt wird. Ein weiterer Vorteil besteht darin, dass die Hindurchführung von Wasserdampf durch einzelne Rohrleitungen, das heißt ein Wasserdampftransport aufwendiger ist als ein Wassertransport, insbesondere deshalb, weil der zu bewältigende Volumenstrom geringer ausfällt. Es ergibt sich auch insofern eine vereinfachte Handhabung.

Mit der erfindungsgemäßen Ausgestaltung ist es beispielsweise gestattet, mit Beginn eines Spülprogramms auch eine Desorption einzuleiten. Der dabei freiwerdende Wasserdampf wird im Dampfkondensator zur Heißwassererzeugung genutzt. Dieses wird in einem Vorratsbehälter bevorratet, bis es in dem parallel weiter fortgeführten Spülprogramm sinnvoll eingesetzt werden kann.

Gemäß der Erfindung ist der Dampfkondensator ein Sprühnebeldampfkondensator. Ein Sprühnebeldampfkondensator verfügt über eine Düse, mittels welcher im Verwendungsfall ein feiner Sprühnebel erzeugt wird. In der Kondensationskammer des Dampfkondensators kommt es zu einer Vermischung dieses Sprühnebels mit dem der Sorptionseinheit entstammenden Wasserdampf. Infolgedessen kondensiert der Wasserdampf aus und es entsteht ein warmes Wassergemisch aus Kondensat einerseits und eingebrachtem Sprühnebel andererseits. Der Einsatz eines solchen Sprühnebelkondensators ist vorgesehen, weil hierdurch in besonders effektiver Weise eine Kondensation des der Sorptionseinheit entstammenden Wasserdampfes erfolgt. Darüber hinaus erfolgt eine solche Kondensation in verhältnismäßig kurzer Zeit, so dass eine ungewollte Wärmeabgabe an die Umgebung auf ein Minimum reduziert ist. Gemäß einem weiteren Merkmal ist der Dampfkondensator an den Spülraum strömungstechnisch angeschlossen. Der Vorratsbehälter dient der Bevorratung von dem Dampfkondensator entstammenden Heißwasser. Dabei kann im Vorratsbehälter solange eine Bevorratung stattfinden, bis im parallel durchgeführten Spülprogramm und/oder einem nachfolgenden Spülprogramm Heißwasser beispielsweise zur Spülflottenerwärmung benötigt wird.

Gemäß einem weiteren Merkmal der Erfindung ist vorgesehen, dass der Dampfkondensator und die Sorptionseinheit eine integrale Baueinheit bilden. "Integrale Baueinheit" meint in diesem Zusammenhang, dass der Dampfkondensator und die Sorptionseinheit zur Vermeidung unnötig langer Strömungswege für den Wasserdampf möglichst nahe einander nebengeordnet und kompakt ausgebildet sind. Bevorzugt ist indes, den Dampfkondensator und die Sorptionseinheit als gemeinsame Baueinheit auszubilden. Bevorzugterweise verfügen der Dampfkondensator und die Sorptionseinheit zu diesem Zweck über ein gemeinsames Gehäuse, das hinsichtlich des Dampfkondensators eine Kondensationskammer und hinsichtlich der Sorptionseinheit eine Sorptionskammer bereitstellt. Dabei sind die Kondensationskammer und die Sorptionskammer mittels eines Übergangs strömungstechnisch miteinander verbunden, so dass im Falle einer bestimmungsgemäßen Desorption freiwerdender Wasserdampf aus der Sorptionskammer direkt in die Kondensationskammer überströmen kann.

Diese integrale Ausgestaltung ist deshalb bevorzugt, weil einerseits ein unnötiger Verlust von Wärmeenergie vermieden werden kann und andererseits der Strömungsweg für den Wasserdampf kurzgehalten ist, wodurch unnötige Strömungsverluste verhindert sind.

Zur Lösung der vorgestehenden Aufgabe wird ferner verfahrensseitig vorgeschlagen ein Verfahren zum Betrieb eines Spülautomaten, insbesondere eines Reinigungs- und/oder Desinfektionsautomaten für gewerbliche Zwecke, mit den Merkmalen des Anspruchs 5, bei dem der während einer Desorption des Sorptionsmittels einer Sorptionseinheit freiwerdende Wasserdampf einem Dampfkondensator, nämlich einem Sprühnebeldampfkondensator zugeführt wird.

Diese erfindungsgemäße Verfahrensdurchführung erbringt die schon vorerläuterten Vorteile. Insbesondere gestattet es die erfindungsgemäße Verfahrensdurchführung, dass eine Desorption des Sorptionsmittels zu einem beliebigen Spülprogrammschritt durchgeführt werden kann, da mittels des Dampfkondensators der Wasserdampf in Heißwasser umgewandelt wird, welches in einem Vorratsbehälter zwischengespeichert und zu einem späteren Zeitpunkt dem Spülraum des Spülautomaten zugeführt werden kann.

Mit der erfindungsgemäßen Ausgestaltung wird insgesamt eine Vorrichtung und ein Verfahren vorgeschlagen, die es gestatten, eine Spülguttrocknung effizienter vorzunehmen und auch die dabei freiwerdende Energie und das dabei freiwerdende Wasser im weiteren Ablauf eines Spülprogramms und/oder in einem nachfolgenden Spülprogramm wieder zu verwenden. Im Kern wird dies erfindungsgemäß dadurch erreicht, dass der im Desorptionsfall freiwerdende Wasserdampf im Unterschied zum Stand der Technik nicht direkt zurück in den Spülraum des Spülautomaten geleitet wird, sondern stattdessen einem Dampfkondensator zugeführt wird, wo eine Umwandlung des Wasserdampfs in Heißwasser stattfindet. Das so ausgebildete Heißwasser kann im Bedarfsfall bevorratet werden, was eine Nutzung zum späteren Zeitpunkt gestattet. Zur Vermeidung unnötiger Energieverluste ist der dafür vorgesehene Vorratsbehälter bevorzugterweise thermisch isoliert ausgebildet.

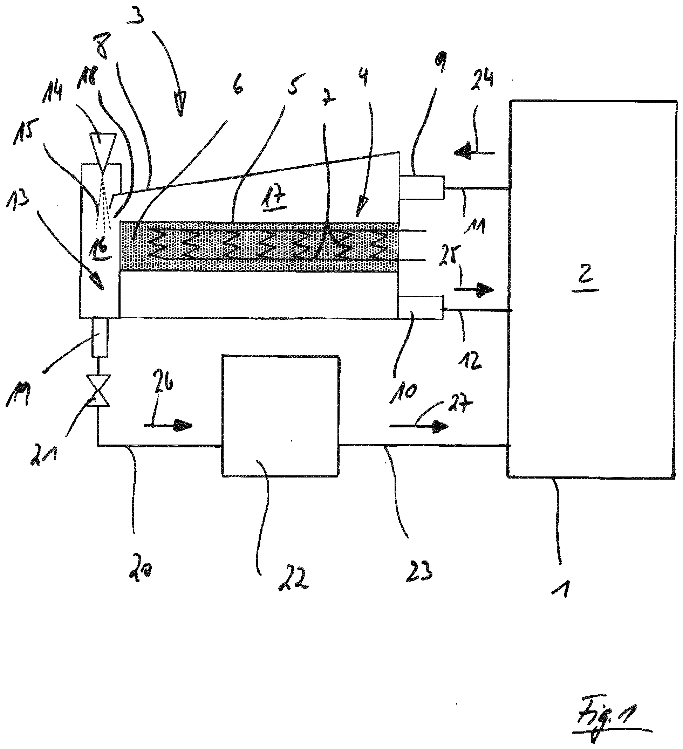

Weitere Merkmale und Vorteile der Erfindung ergeben sich aus der nachfolgenden Beschreibung anhand der einzigen Figur 1, die in schematischer Darstellung einen erfindungsgemäßen Spülautomaten zeigt.

Fig. 1 lässt in schematischer Darstellung einen Spülbehälter 1 eines im Näheren nicht dargestellten Spülautomaten erkennen. Der Spülbehälter 1 stellt einen Spülraum 2 bereit, der im bestimmungsgemäßen Verwendungsfall der Aufnahme von zu reinigendem und nicht näher dargestelltem Spülgut dient.

Innerhalb des Spülbehälters 1 ist eine ebenfalls nicht näher dargestellte Sprüheinrichtung zur Beschickung von zu reinigendem Spülgut mit Spülflotte angeordnet. Diese Sprüheinrichtung verfügt typischerweise über zum Teil verdrehbar innerhalb des Spülraums 2 angeordnete Sprüharme.

Der Spülautomat verfügt desweiteren über eine Trocknungseinrichtung 3. Dabei ist die Trocknungseinrichtung 3 als Sorptionstrocknung ausgebildet und stellt eine Sorptionseinheit 4 bereit. Diese verfügt über einen mit Sorptionsmittel 6 befüllten Behälter 5 sowie über eine elektrische Heizung 7, die in das vom Behälter 5 aufgenommene Sorptionsmittel 6 eingebettet ist. Als Sorptionsmittel 6 kommt beispielsweise Zeolith zur Verwendung.

Die Trocknungseinrichtung 3 verfügt desweiteren über einen Dampfkondensator 13, und zwar in der Ausgestaltung eines Sprühnebeldampfkondensators. Dabei bilden die Sorptionseinheit 4 und der Dampfkondensator 13 eine integrale Baueinheit und verfügen über ein gemeinsames Gehäuse 8. Dieses stellt dampfkondensatorseitig eine Kondensationskammer 16 und sorptionseinheitenseitig eine Sorptionskammer 17 zur Verfügung. Mittels eines Übergangs 18 sind die Kondensationskammer 16 und die Sorptionskammer 17 strömungstechnisch miteinander verbunden.

Die Sorptionskammer 17 verfügt über zwei Anschlussstutzen 9 und 10, die über eine jeweilige Leitung 11 und 12 mit dem vom Spülbehälter 1 bereitgestellten Spülraum 2 in strömungstechnischer Verbindung stehen.

Der Dampfkondensator 13 verfügt über einen Anschlussstutzen 19. Dieser steht über eine Leitung 20 mit einem Vorratsbehälter 22 in strömungstechnischer Verbindung, wobei in die Leitung 20 ein Ventil 21 integriert ist.

Der Vorratsbehälter 22 steht in strömungstechnischer Verbindung mit dem vom Spülbehälter 1 bereitgestellten Spülraum 2, zu welchem Zweck eine Leitung 23 vorgesehen ist.

Im bestimmungsgemäßen Verwendungsfall wird von dem Dampfkondensator 13 mittels einer Düse 14 ein Sprühnebel 15 erzeugt, wie dies in Fig. 1 schematisch dargestellt ist.

Die Funktionsweise der erfindungsgemäßen Ausgestaltung ist die folgende:
Nach Abschluss eines bestimmungsgemäßen Spülprogramms ist das im Spülraum 2 befindliche Spülgut zu trocknen. Zu diesem Zweck wird ein in den Figuren nicht näher dargestelltes Gebläse der Trocknungseinrichtung 3 eingeschaltet. Infolgedessen stellt sich eine Luftströmung ein, die dafür sorgt, dass im Spülraum 2 befindliche warmfeuchte Luft ausgetrieben und der Sorptionseinheit 6 über die Leitung 11 und den Stutzen 9 in Entsprechung des Pfeils 24 zugeführt wird. Innerhalb der Sorptionseinheit 6 kommt es zu einem Kontakt zwischen der warmfeuchten Luft und dem von der Sorptionseinheit 5 bereitgestellten Sorptionsmittel 6. Dabei wird der warmfeuchten Luft durch das reversibel dehydrierbare Sorptionsmittel 6 Feuchtigkeit durch Kondensation entzogen, infolgedessen es zur Lufttrocknung kommt. Die insoweit getrocknete Luft wird über den Anschlussstutzen 10 und die Leitung 12 in Entsprechung des Pfeils 25 zurück in den Spülraum 2 gefördert. Mittels des Gebläses erfolgt im Weiteren eine Umwälzung der Luft und der so erzeugte Luftaustausch zwischen dem Spülbehälter 1 einerseits und der Sorptionseinheit 4 andererseits wird solange aufrechterhalten, bis eine wunschgemäße Trocknung der Luft und damit auch des im Spülraum 2 befindlichen Spülguts erreicht ist.

Zum Zwecke der Regenerierung, das heißt Desorption des Sorptionsmittels 6 wird dieses erhitzt, zu welchem Zweck die elektrische Heizung 7 in Betrieb genommen wird. Infolge der Aufheizung des Sorptionsmittels 6 tritt aus dem Sorptionsmittel 6 das zuvor aufgenommene Wasser als heißer Wasserdampf aus, es kommt mithin zu einem Austreiben der vom Sorptionsmittel 6 gehaltenen Feuchtigkeit durch Verdunstung. Der so freiwerdende Wasserdampf sammelt sich in der Sorptionskammer 17 an. Ein Überströmen des Wasserdampfes in den Spülraum 2 findet aufgrund der im Folgenden beschriebenen Dampfkondensation nicht statt.

Mit Entstehung von Wasserdampf innerhalb der Sorptionseinheit 4 wird die Düse 14 des Dampfkondensators 13 eingeschaltet. Diese erzeugt innerhalb der Kondensationskammer 16 einen feinen Sprühnebel, der am Übergang 18 zwischen Kondensationskammer 16 und Sorptionskammer vorbeistreicht. Hierdurch bedingt entsteht eine Art "Mitreißeffekt", infolgedessen der in der Sorptionskammer 17 befindliche heiße Wasserdampf in die Kondensationskammer 16 eingesogen wird. Hier kommt es dann zu einem Kontakt zwischen dem in die Kondensationskammer 16 eingesogenen Wasserdampf und dem dort durch die Düse 14 ausgebildeten Sprühnebel 15. Es findet infolgedessen eine Auskondensation des Wasserdampfes statt und es entsteht ein heißes Wassergemisch aus Kondensat einerseits und eingebrachtem Sprühnebel andererseits. Der Temperaturunterschied zwischen dem Wasser des Sprühnebels und dem aus dem Sorptionsmittel 6 tretenden heißen Wasserdampf und der dadurch bedingte Druckunterschied bewirkt, dass der Wasserdampf in Richtung der Kondensationskammer getrieben wird und verhindert insbesondere, dass der Wasserdampf unmittelbar in den Spülraum gelangen kann. Denkbar ist es darüber hinaus, dies zusätzlich dadurch sicherzustellen, dass die Desorption bei geschlossenen Anschlussstutzen 9 und 10 vorgenommen wird.

Das dem Dampfkondensator 13 entstammende Heißwasser gelangt über einen Anschlussstutzen 19 und eine daran angeschlossene Leitung 20 in Entsprechung des Pfeils 26 zu einem Vorratsbehälter 22. In die Leitung 20 ist ein Absperrventil 21 integriert, das im Desorptionsfall geöffnet, im Sorptionsfall aber geschlossen ist.

Der Vorratsbehälter 22 dient der Bevorratung des dem Dampfkondensator 13 entstammenden Heißwassers, bis es zu einer Verwendung desselben im weiteren Spülprogramm und/oder einem nachfolgenden Spülprogramm kommt. Das im Vorratsbehälter 22 bevorratete Heißwasser wird zu diesem Zweck über die Leitung 23 in Entsprechung des Pfeils 27 in den Spülraum 2 eingeleitet, in welchem es als Spülflotte und/oder in Vermischung mit eingeleitetem Frischwasser als Spülflotte genutzt werden kann.

### Bezugszeichen

- 1: Spülbehälter
- 2: Spülraum
- 3: Trocknungseinrichtung
- 4: Sorptionseinheit
- 5: Behälter
- 6: Sorptionsmittel
- 7: Heizung
- 8: Gehäuse
- 9: Anschlussstutzen
- 10: Anschlussstutzen
- 11: Leitung
- 12: Leitung
- 13: Dampfkondensator
- 14: Düse
- 15: Sprühnebel
- 16: Kondensationskammer
- 17: Sorptionskammer
- 18: Übergang
- 19: Anschlussstutzen
- 20: Leitung
- 21: Ventil
- 22: Vorratsbehälter
- 23: Leitung
- 24: Pfeil
- 25: Pfeil
- 26: Pfeil
- 27: Pfeil

## Patentansprüche

1. Spülautomat, insbesondere Reinigung- und/oder Desinfektionsautomat für gewerbliche Zwecke, mit einem einen Spülraum (2) bereitstellenden Spülbehälter (1) und einer Trocknungseinrichtung (3) zur Trocknung von im Spülraum (2) befindlichem Spülgut, wobei die Trocknungseinrichtung (3) eine mit einem reversibel dehydrierbaren Sorptionsmittel (6) bestückte Sorptionseinheit (4) aufweist, die mit dem Spülraum (2) in strömungstechnischer Verbindung steht, und mit einem Dampfkondensator (13), der an die Sorptionseinheit (4) strömungstechnisch angeschlossen ist, so dass der im Fall der Desorption des Sorptionsmittels freiwerdende Wasserdampf in den Dampfkondensator (13) einleitbar ist, **dadurch gekennzeichnet,**
**dass** der Dampfkondensator (13) ein Sprühnebeldampfkondensator ist, an den ausgangsseitig ein Vorratsbehälter (22) strömungstechnisch angeschlossen ist, und dass das im Sprühnebeldampfkondensator entstehende warme Wassergemisch aus Kondensat und eingebrachtem Sprühnebel im Vorratsbehälter (22) zwischenspeicherbar und von dort aus zu einem späteren Zeitpunkt dem Spülraum (2) zuführbar ist.

2. Spülautomat nach Anspruch 1, **dadurch gekennzeichnet, dass** der Dampfkondensator (13) an den Spülraum (2) strömungstechnisch angeschlossen ist.

3. Spülautomat nach einem der vorhergehenden Ansprüche, **dadurch gekennzeichnet, dass** der Dampfkondensator (13) und die Sorptionseinheit (4) eine integrale Baueinheit bilden.

4. Spülautomat nach einem der vorhergehenden Ansprüche, **dadurch gekennzeichnet, dass** der Dampfkondensator (13) und die Sorptionseinheit (4) ein gemeinsames Gehäuse (8) aufweisen, das eine Kondensationskammer (16) und eine Sorptionskammer (17) bereitstellt.

5. Verfahren zum Betrieb eines Spülautomaten, insbesondere eines Reinigungs- und/oder Desinfektionsautomaten für gewerbliche Zwecke, nach einem der vorhergehenden Ansprüche 1 bis 5, der einen Spülraum (2) bereitstellenden Spülbehälter (1) und eine Trocknungseinrichtung (3) zur Trocknung von im Spülraum (2) befindlichem Spülgut aufweist, wobei die Trocknungseinrichtung (3) eine mit einem reversibel dehydrierbaren Sorptionsmittel (6) bestückte Sorptionseinheit (4) aufweist, die mit dem Spülraum (2) in strömungstechnischer Verbindung steht, **dadurch gekennzeichnet, dass** der während einer Desorption des Sorptionsmittels (6) freiwerdende Wasserdampf einem Sprühnebeldampfkondensator (13) zugeführt wird, und das im Sprühnebeldampfkondensator (13) entstehende warme Wassergemisch aus Kondensat und eingebrachtem Sprühnebel einem Vorratsbehälter (22) zugeführt, dort zwischengespeichert, und von dort aus zu einem späteren Zeitpunkt dem Spülraum (2) zugeführt wird.

## Claims

1. Automatic dishwasher, in particular a cleaning and/or disinfection machine for commercial purposes, comprising a washing container (1) that provides a washing chamber (2), and a drying device (3) for drying washware located in the washing chamber (2), the drying device (3) having a sorption unit (4) that is provided with a sorbent (6) that can be reversibly dehydrogenated, which sorption unit is in fluid connection with the washing chamber (2), and comprising a steam condensor (13) which is fluidically connected to the sorption unit (4) so that the water vapour that is released in the event of desorption of the sorbent can be introduced into the steam condensor (13),
**characterised**
**in that** the steam condensor (13) is an atomised spray steam condensor, to which a storage container (22) is fluidically connected on the output side,
and **in that** the warm water mixture of condensate and introduced spray mist produced in the atomised spray steam condensor can be temporarily stored in the storage container (22) and later supplied therefrom to the washing chamber (2).

2. Automatic dishwasher according to claim 1, **characterised in that** the steam condensor (13) is fluidically connected to the washing chamber (2).

3. Automatic dishwasher according to either of the preceding claims, **characterised in that** the steam condensor (13) and the sorption unit (4) form an integral unit.

4. Automatic dishwasher according to any of the preceding claims, **characterised in that** the steam condensor (13) and the sorption unit (4) comprise a common housing (8) which provides a condensation chamber (16) and a sorption chamber (17).

5. Method for operating an automatic dishwasher, in particular a cleaning and/or disinfection machine for commercial purposes, according to any of the preceding claims, claims 1 to 5, comprising a washing container (1) that provides a washing chamber (2), and a drying device (3) for drying washware located in the washing chamber (2), the drying device (3) comprising a sorption unit (4) that is provided with a sorbent (6) that can be reversibly dehydrogenated, which sorption unit is in fluidic connection with the washing chamber (2), **characterised in that** the water vapour that is released during desorption of the sorbent (6) is supplied to an atomised spray steam condensor (13), and the warm water mixture of condensate and introduced spray mist produced in the atomised spray steam condensor (13) is supplied to a storage container (22), temporarily stored therein, and later supplied therefrom to the washing chamber (2).

## Revendications

1. Machine de rinçage automatique, en particulier une machine automatique de nettoyage et/ou de désinfection pour des usages industriels, avec une cuve de rinçage (1), laquelle met à disposition une chambre de rinçage (2), et avec un dispositif de séchage (3), lequel est destiné au séchage d'articles à laver qui se trouvent dans la chambre de rinçage (2), dans laquelle le dispositif de séchage (3) présente une unité de sorption (4), laquelle est dotée d'un agent de sorption (6) pouvant être déshydrogéné de manière réversible et laquelle se trouve en communication fluidique avec la chambre de rinçage (2), ainsi qu'avec un condensateur de vapeur (13), lequel est raccordé fluidiquement à l'unité de sorption (4), de telle sorte que la vapeur d'eau qui est dégagée en cas de désorption de l'agent de sorption peut être introduite dans le condensateur de vapeur (13),
**caractérisée en ce que**
le condensateur de vapeur (13) est un condensateur de vapeur à brouillard de pulvérisation, auquel est raccordé fluidiquement un réservoir (22) qui est placé du côté de la sortie ; et
**en ce que**
le mélange d'eau chaude qui est produit dans le condensateur de vapeur à brouillard de pulvérisation, lequel mélange d'eau est composé de condensat et de brouillard de pulvérisation injecté, peut être accumulé temporairement dans le réservoir (22) et, de celui-ci, peut être acheminé vers la chambre de rinçage (2) à un moment ultérieur.

2. Machine de rinçage automatique selon la revendication 1, **caractérisé en ce que** le condensateur de vapeur (13) est raccordé fluidiquement à la chambre de rinçage (2).

3. Machine de rinçage automatique selon l'une des revendications précédentes, **caractérisé en ce que** le condensateur de vapeur (13) et l'unité de sorption (4) forment une unité de structure intégrale.

4. Machine de rinçage automatique selon l'une des revendications précédentes, **caractérisé en ce que** le condensateur de vapeur (13) et l'unité de sorption (4) présentent un carter (8) commun qui met à disposition une chambre de condensation (16) et une chambre de sorption (17).

5. Procédé destiné au fonctionnement d'une machine de rinçage automatique, en particulier d'une machine automatique de nettoyage et/ou de désinfection pour des usages industriels, selon l'une des revendications précédentes 1 à 5, laquelle machine de rinçage automatique présente une cuve de rinçage (1), laquelle met à disposition une chambre de rinçage (2), ainsi qu'un dispositif de séchage (3), lequel est destiné au séchage d'articles à laver qui se trouvent dans la chambre de rinçage (2), dans lequel le dispositif de séchage (3) présente une unité de sorption (4), laquelle est dotée d'un agent de sorption (6) pouvant être déshydrogéné de manière réversible et laquelle se trouve en communication fluidique avec la chambre de rinçage (2), **caractérisé en ce que** la vapeur d'eau qui est dégagée pendant une désorption de l'agent de sorption (6) est acheminée vers un condensateur de vapeur à brouillard de pulvérisation (13), et le mélange d'eau chaude qui est produit dans le condensateur de vapeur à brouillard de pulvérisation (13), lequel mélange d'eau est composé de condensat et de brouillard de pulvérisation injecté, est acheminé vers un réservoir (22), y est accumulé temporairement, et est acheminé dudit réservoir (22) vers la chambre de rinçage (2) à un moment ultérieur.
